Europäisches Patentamt

European Patent Office

Office européen des brevets

(11) Veröffentlichungsnummer: **0 005 716**

**A1**

(12) **EUROPÄISCHE PATENTANMELDUNG**

(21) Anmeldenummer: 79101089.5

(22) Anmeldetag: 09.04.79

(51) Int. Cl.²: **C 03 B 33/06**
**B 24 B 9/12**

(30) Priorität: 26.05.78 DE 2823088

(43) Veröffentlichungstag der Anmeldung:
12.12.79 Patentblatt 79 25

(84) Benannte Vertragsstaaten:
BE CH FR GB IT NL SE

(71) Anmelder: Ilk, Emil
Ahornweg 4
D-8372 Zwiesel(DE)

(72) Erfinder: Ilk, Emil
Ahornweg 4
D-8372 Zwiesel(DE)

(74) Vertreter: Schulze Horn, Stefan, Dipl.-Ing. et al,
Goldstrasse 36
D-4400 Münster(DE)

(54) Halteeinrichtung für becherförmige Glasgegenstände an einer Glasbearbeitungsmaschine.

(57) Die Erfindung betrifft eine Halteeinrichtung für becherförmige Glasgegenstände (Becher) an einer Glasbearbeitungsmaschine, insbesondere an einem Abspreng- und Schleifautomaten, in welche der Becher (8) vor Beginn des Bearbeitungsvorganges eingesetzt wird, in welcher er während der Bearbeitung und gegebenenfalls des Weitertransports gehalten und aus welcher er danach wieder entnommen wird mit einem tassenförmigen Halteelement (4), in dessen Hohlraum der Becher (8) eingesetzt wird und dessen Fußteil (5) von einem sich gegebenenfalls drehenden Halter (3) der Glasbearbeitungsmaschine erfaßt ist und wobei die Innenseiten des Randes des Halteelementes (4) Dicht-, Haft- oder Klemmittel (6) tragen.

Fig. 2

- 1 -

Die Erfindung betrifft eine Halteeinrichtung für becherförmige Glasgegenstände (Becher) an einer Glasbearbeitungsmaschine, insbesondere an einem Absprengund Schleifautomaten, in welche der Becher vor Beginn des Bearbeitungsvorganges eingesetzt wird, in welcher er während der Bearbeitung und gegebenenfalls des Weitertransports gehalten und aus welcher er danach wieder entnommen wird.

Es sind bereits Glasbearbeitungsmaschinen in Form von Absprengen- und Schleifautomaten bekannt, bei denen vollautomatisch das geblasene Glas bis zur Fertigstellung bearbeitet wird, bei denen also der beim Blasen entstandene überflüssige Glasteil abgesprengt wird und danach der jetzt entstandene Glasrand abgeschliffen und geglättet wird.

Diese Absprengen- und Schleifautomaten sind gewöhnlich nur für die Bearbeitung von Kelchgläsern geeignet, wobei die Glasfüße innerhalb der sich bewegenden Maschinenteile gehalten werden.

Nachteilig ist es also nicht möglich, mit den vorhandenen Absprengen- und Schleifautomaten auch Gläser ohne Fuß zu bearbeiten, z. B. Bechergläser.

Es ist jetzt Aufgabe der Erfindung, diesen Nachteil zu überwinden und eine Halteeinrichtung für Glasbearbeitungsmaschinen allgemein und Absprengen- und Schleifauto-

maten im besonderen zu schaffen, mit welcher es möglich ist, nicht nur Stielgläser, sondern auch Bechergläser so zu halten, daß eine Bearbeitung mit der Maschine ohne eine Umstellung oder einen Umbau der Halterungen möglich ist.

Die erfindungsgemäße Halteeinrichtung soll weiterhin einfach aufgebaut sein, betriebssicher und wirtschaftlich arbeiten und neben einer für die Bearbeitung notwendigen sicheren Halterung der Bechergläser ihre Abnahme aus dem Transportplatz ohne Schwierigkeiten ermöglichen.

Diese Aufgabe wird bei der eingangs genannten Halteeinrichtung erfindungsgemäß dadurch gelöst, daß sie ein tassenförmiges Halteelement aufweist, in dessen Hohlraum der Becher eingesetzt wird und dessen Fußteil von einem sich gegebenenfalls drehenden Halter der Glasbearbeitungsmaschine erfaßt ist und wobei die Innenseiten des Randes des Halteelements Dicht-, Haft- oder Klemmittel trägt.

Vorteilhaft ist die Detailausbildung derart, daß das Dichtmittel ein umlaufender, an der Oberfläche des Bechers anliegender Ring ist und Vakuumbohrungen, -Leitungen und Pumpen zum Einstellen des Vakuums im Innenraum des Haltelementes außerhalb des Bechers vorliegen.

Damit ohne Umstellung auch weiterhin Gläser mit Stielen bearbeitet werden können bzw. die erfindungsgemäßen Halteeinrichtungen ohne Anpassung des Automaten verwendet werden können, weisen vorteilhaft die Halter der Glasbearbeitungsmaschinen eine ein Erfassen des Fußes eines Kelchglases ermöglichende Form auf. Die Aufnahmeöffnung des Halteelementes zeigt dabei nach unten, um die übliche Halterung der Gläser mit ihrer Öffnung nach unten während des automatischen Bearbei-

- 3 -

tungsvorganges beibehalten zu können.

Um ein einfaches Abnehmen der fertiggestellten Bechergläser zu ermöglichen, ist vorteilhaft ein Belüftungsventil in dem Vakuumsystem vorhanden, welches eine Belüftung des Innenraumes des Halteelementes vor der Entnahme bzw. bei der Entnahme des Bechers vornimmt.

Angesichts der einfachen und dennoch höchst wirkungsvoll arbeitenden Halteeinrichtung kann insbesondere
unter Berücksichtigung des Umstandes, daß die vorhandenen Bearbeitungsmaschinen nicht umgerüstet oder angepaßt zu werden brauchen, von einer idealen Lösung
der anstehenden Probleme durch die Erfindung gesprochen
werden.

Im folgenden wird ein Ausführungsbeispiel der Erfindung
anhand von Zeichnungen näher beschrieben. Es zeigen:

Figur 1 den Teilschnitt durch einen Bearbeitungsautomaten zur Bearbeitung normaler Stiel- oder
Kelchgläser und

Figur 2 in vergrößertem Maßstab einen Ausschnitt des
gleichen Automaten mit der erfindungsgemäßen
Halteeinrichtung und einem darin gehalterten
Becherglas.

Die zusätzliche Halteeinrichtung gemäß der Erfindung
eignet sich insbesondere zum Einsatz an Abspreng- und
Schleifautomaten, wie sie in der älteren veröffentlichten deutschen Patentanmeldung P 27 00 487.1 des
Anmelders bereits beschrieben sind. Zur Vermeidung
von Wiederholungen wird auf die Beschreibung dieser
Patentanmeldung ausdrücklich Bezug genommen. Eine Beschreibung des eigentlichen Automaten erfolgt in diesem Zusammenhang also nur soweit, wie dies zum Verständnis der Erfindung notwendig ist.

- 4 -

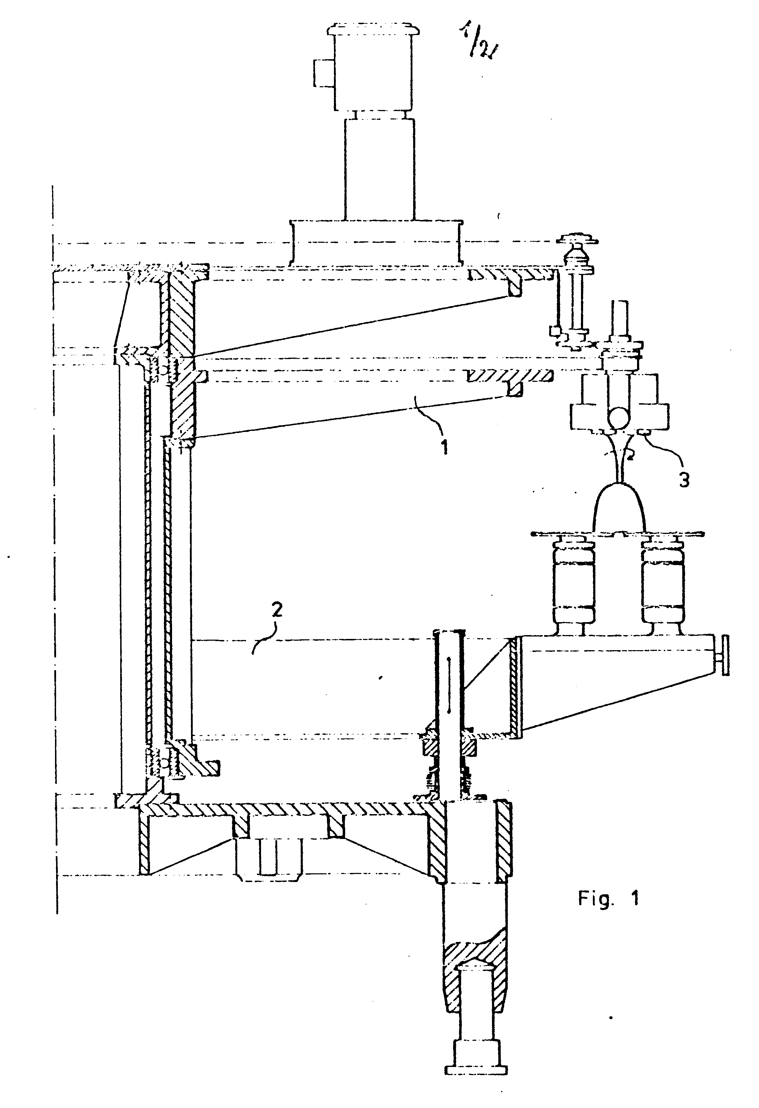

Gemäß Figur 1 besteht ein Abspreng- und Schleifautomat aus einem rotierendem Tisch 1 zur Halterung der Gläser und einem feststehenden, heb- und senkbaren Tisch 2 mit den einzelnen Bearbeitungsstationen, von denen eine Abschleifstation gezeigt ist. Der Tisch 1 dreht sich nach Art eine Karussels und bewegt nacheinander die Gläser jeweils über die Bearbeitungsstationen.

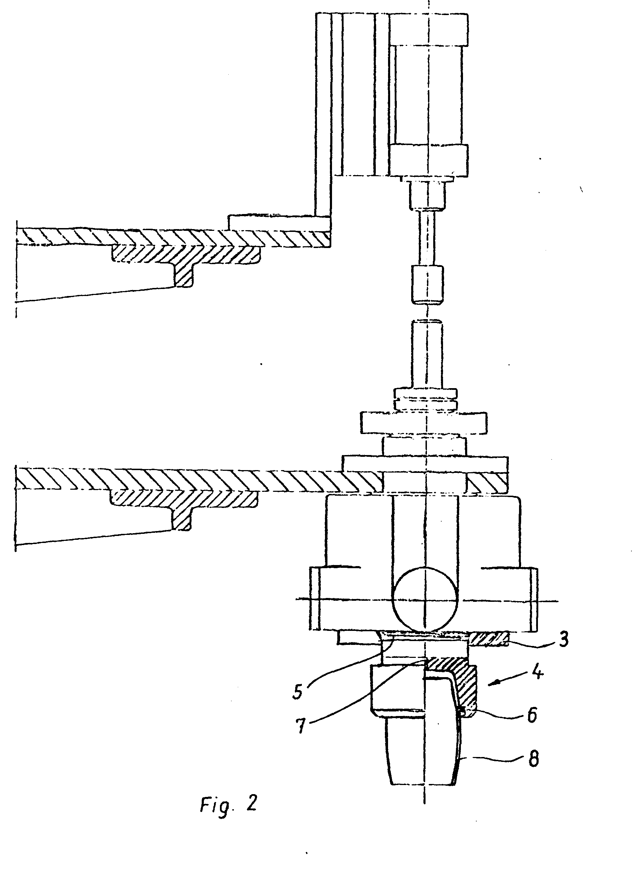

An den Stellen des Tisches 1, an denen die Gläser in rotierenden Haltern 3 gehaltert werden, ist gemäß Figur 2 statt eines Kelch- oder Stielglases ein Halteelement 4 eingespannt, welches die Form einer nach unten geöffneten Tasse besitzt. Der Fußteil 5 des Halte-elements 4 ist so ausgebildet, daß er wie ein Kelchglasfuß von der Halterung 3 erfaßt wird, sodaß ein Umrüsten des Automaten beim Einsatz der erfindungsgemäßen Halterungen nicht mehr erforderlich ist.

Das Haltelement 4 weist an seinem inneren Rand Dichtmittel bzw. Ringe 6 auf und über eine zentrische Vakuumbohrung 7 erfolgt ein Anschluß an ein Vakuumsystem mit nicht gezeigten Leitungen, Pumpen und Ventilen, welches bei eingesetztem Becher 8 in dem Spalt zwischen dem Becher 8 und dem Innenraum des Halteelementes 4 ein Vakuum zu erzeugen vermag, welches den Becher 8 gegen Verdrehung gesichert innerhalb des Elementes 4 festhält.

Ein nicht gezeigtes Belüftungsventil sorgt dabei für eine Belüftung des Innenraums des Halteelements 4, wenn der Becher in seine Entnahmeposition bewegt worden ist.

Ein nicht gezeigter Stößel, welcher die Vakuumbohrung 7 konzentrisch durchdringt, kann weiterhin dafür sorgen, daß sich das erforderliche Vakuum automatisch einstellt, wenn der Becher 8 von unten in das Halte-

- 5 -

element 4 eingeschoben wird und der Becherboden den Stößel betätigt.

Die Anwendung der erfindungsgemäßen Halteeinrichtung ist also auf einfachste Art und besonders betriebssicher möglich.

Patentansprüche:

1. Halteeinrichtung für becherförmige Glasgegenstände (Becher), an einer Glasbearbeitungsmaschine, insbesondere an einem Abspreng- und Schleifautomaten, in welche der Becher vor Beginn des Bearbeitungsvorganges eingesetzt wird, in welcher er während der Bearbeitung und gegebenenfalls des Weitertransports gehalten und aus welcher er danach wieder entnommen wird, dadurch gekennzeichnet, daß sie ein tassenförmiges Halteelement (4) aufweist, in dessen Hohlraum der Becher (8) eingesetzt wird und dessen Fußteil (5) von einem sich gegebenenfalls drehenden Halter (3) der Glasbearbeitungsmaschine erfaßt ist und wobei die Innenseiten des Randes des Halteelementes (4) Dicht-, Haft- oder Klemmittel (6) trägt.

2. Halteeinrichtung nach Anspruch 1, dadurch gekennzeichnet, daß das Dichtmittel (6) ein umlaufender, an der Oberfläche des Bechers (8) anliegender Ring ist und Vakuumbohrungen (7), -Leitungen und Pumpen zum Einstellen eines Vakuums im Innenraum des Halteelementes (4) außerhalb des Bechers (8) vorliegen.

3. Halteeinrichtung nach Anspruch 1 oder 2, dadurch gekennzeichnet, daß die Halter (3) der Glasbearbeitungsmaschine eine ein Erfassen des Fußes eines Kelchglases ermöglichende Form aufweisen.

4. Halteeinrichtung nach Anspruch 1 bis 3, dadurch gekennzeichnet, daß die Aufnahmeöffnung des Halteelementes (4) nach unten zeigt.

5. Halteeinrichtung nach einem der vorhergehenden Ansprüche, gekennzeichnet durch ein Lüftungsventil zur Belüftung des Innenraumes des Halteelementes (4) zur Entnahme des Bechers (8).

Fig. 1

Fig. 2

0005716

Nummer der Anmeldung

**Europäisches Patentamt**

**EUROPÄISCHER RECHERCHENBERICHT**

EP 79 101 089.5

| EINSCHLÄGIGE DOKUMENTE | | | KLASSIFIKATION DER ANMELDUNG (Int.Cl.²) |
|---|---|---|---|
| **Kategorie** | Kennzeichnung des Dokuments mit Angabe. soweit erforderlich, der maßgeblichen Teile | betrifft Anspruch | |
| | AT - B - 241 718 (VEREENIGDE GLAS-FABRIEKEN) <br> * Ansprüche 3 und 4 * <br><br> --- | 1,3-5 | C 03 B 33/06 <br> B 24 B 9/12 |
| | US - A - 3 812 949 (LUSH) <br> * Fig. 11 und 12 * <br><br> --- | 1,2, <br> 3,5 | |
| | BE - A - 723 517 (DIAMANT BOART) <br> * Fig. 1 und 8 * <br><br> --- | 1-4 | **RECHERCHIERTE SACHGEBIETE (Int. Cl.²)** <br><br> B 24 B 9/12 |
| A | DE - C - 1 059 628 (H. ANDREASEN) <br><br> --- | | B 24 B 41/06 <br> C 03 B 23/10 <br> C 03 B 33/06 |
| A | DE - B - 1 596 428 (ETABLISSEMENTS BIEBUYCK) <br><br> --- | | C 03 B 35/00 |
| P,D | DE - A - 2 700 487 (E. ILK) <br><br> ---- | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie. übereinstimmendes Dokument

| X | Der vorliegende Recherchenbericht wurde für alle Patentansprüche erstellt. | | |
|---|---|---|---|
| **Recherchenort** <br> Berlin | **Abschlußdatum der Recherche** <br> 06-08-1979 | **Prüfer** <br> HÖRNER | |

EPA form 1503.1   06.78